Europäisches Patentamt

**European Patent Office**

**Office européen des brevets**

(11) Numéro de publication: **0 285 491 B1**

## (12) FASCICULE DE BREVET EUROPEEN

(45) Date de publication de fascicule du brevet: **26.08.92**  (51) Int. Cl.⁵: **G01J 5/06, F25D 19/00**

(21) Numéro de dépôt: **88400648.7**

(22) Date de dépôt: **18.03.88**

(54) **Refroidisseur cryogénique.**

(30) Priorité: **23.03.87 FR 8703990**

(43) Date de publication de la demande:
**05.10.88 Bulletin  88/40**

(45) Mention de la délivrance du brevet:
**26.08.92 Bulletin  92/35**

(84) Etats contractants désignés:
**AT BE CH DE ES FR GB GR IT LI LU NL SE**

(56) Documents cités:
**EP-A- 0 059 272      EP-A- 0 184 070**
**FR-A- 2 345 890      US-A- 3 060 338**
**US-A- 3 193 610      US-A- 4 344 302**

(73) Titulaire: **ABG SEMCA S.A.**
**408, avenue des Etats-Unis**
**F-31016 Toulouse Cédex(FR)**

(72) Inventeur: **Cremont Henri**
**Thomson-CSF SCPI 19 avenue de Messine**
**F-75008 Paris(FR)**

(74) Mandataire: **Grynwald, Albert et al**
**THOMSON-CSF SCPI**
**F-92045 PARIS LA DEFENSE CEDEX 67(FR)**

## Description

L'invention concerne un refroidisseur cryogénique, du type comprenant une sonde pourvue d'une extrémité refroidie par détente d'un gaz; elle vise particulièrement les refroidisseurs fonctionnant en circuit fermé suivant les cycles thermodynamiques de Stirling, de Gifford, de Vuilleumier, de Brayton ou de Joule-Thomson.

Ces refroidisseurs sont maintenant bien connus et sont constitués de deux parties:
- un groupe moto-compresseur ou un moto-oscillateur "chaud" ayant pour fonction de générer un débit de gaz sous pression ou une oscillation de pression,
- une sonde de forme cylindrique ayant une extrémité dans laquelle est réalisée une détente de gaz engendrant une production de froid, cette extrémité dite froide ou refroidie étant disposée dans un cryostat appelé à assurer une isolation thermique de celle-ci.

Ces refroidisseurs servent à refroidir un échantillon, notamment un ou plusieurs détecteurs infra-rouges, et à maintenir celui-ci à très basse température, par exemple de l'ordre de 70° à 80° K (degré Kelvin). On utilise de préférence un cryostat à double enveloppe sous vide dans lequel est fixé l'échantillon, de façon que cet échantillon et le cryostat forment un ensemble indépendant par rapport à la sonde, qui puisse être séparé de celle-ci sans avoir à refaire le vide à chaque mise en place.

L'échantillon étant situé dans la double enveloppe du cryostat, il est nécessaire dans ce type de dispositif d'assurer une liaison thermique entre l'extrémité refroidie de la sonde et l'enveloppe intérieure du cryostat sur laquelle est fixé l'échantillon.

Plusieurs solutions sont connues et utilisées depuis de nombreuses années pour assurer cette liaison thermique. L'enveloppe intérieure du cryostat est formée par une paroi cylindrique fermée par un fond circulaire au-dessous duquel est fixé l'échantillon, et toutes les solutions utilisées ont consisté à réaliser une liasion thermique entre l'extrémité refroidie de la sonde et le fond circulaire de l'enveloppe interne ; toutefois, aucune de ces solutions n'est entièrement satisfaisante, chacune possédant des défauts qui lui sont spécifiques et qui sont résumés ci-après.

Une première solution (brevet US 4 194 119) consiste à disposer un ressort métallique entre l'extrémité refroidie de la sonde et le fond de l'enveloppe ; toutefois, la transmission thermique obtenue est très médiocre en raison de la faible section de conduction thermique et des contacts de surface réduite entre le ressort et les deux extrémités qu'il relie.

Une autre solution consiste à bourrer l'espace compris entre l'extrémité refroidie de la sonde et le fond de l'enveloppe au moyen de paillettes métalliques, éponges métalliques ou matériau équivalent. Cette solution est peu pratique et la mise en place du matériau est une opération délicate ; de plus, à chaque démontage de la sonde (par rapport au cryostat), ces éléments doivent être soigneusement nettoyés, le matériau assurant la liaison thermique étant à changer chaque fois.

Une autre solution consiste à disposer entre l'extrémité refroidie de la sonde et le fond de l'enveloppe une pastille de métal mou, qui est écrasée entre ces deux éléments ; toutefois, ce type de dispositif est inapte à autoriser des dilatations longitudinales notables de la sonde et ne peut fonctionner que dans une plage étroite de température ; en outre, les pièces formant la sonde et l'enveloppe interne de cryostat doivent être usinées avec de très faibles tolérances pour que le montage puisse s'effectuer correctement. De plus, les vibrations longitudinales de la sonde sont directement transmises à l'enveloppe du cryostat et donc à l'échantillon, ce qui constitue un très grave défaut dans le cas où l'échantillon est formé par des détecteurs infra-rouges. Par ailleurs, la pastille de métal mou écrasé entraîne la formation d'incrustations dans la sonde et l'enveloppe, et le nettoyage de ces éléments est difficile à réaliser à chaque démontage, la pastille de métal mou étant généralement à changer.

Une autre solution consiste à fixer la sonde dans le cryostat par l'intermédiaire d'un dispositif à ressort qui maintient l'extrémité de la sonde directement en appui contre le fond de l'enveloppe interne (avec éventuellement présence d'une graisse ou d'un vernis). Cette solution présente l'inconvénient de conduire à une complexité mécanique plus grande ; de plus, elle ne supprime pas le défaut de la solution précédente, relatif à la transmission des vibrations longitudinales de la sonde à l'échantillon.

Le brevet US 3 306 075 décrit un système de liaison thermique à ressorts interposé entre la paroi latérale cylindrique de la sonde et la paroi latérale cylindrique de l'enveloppe intérieure du cryostat. Ce système connu est d'une construction complexe et encombrante ; de plus il est inutilisable avec des cryostats où la sonde est ajustée dans ledit cryostat avec un jeu périphérique relativement faible.

Le brevet US 3 807 188 décrit un système de liaison thermique comportant une chambre dont la paroi externe présente une souplesse dans le sens longitudinal et qui est remplie d'un liquide tel que du mercure. Ce système connu est très complexe et oblige à prévoir une enveloppe interne de cryostat ayant un fond de forme spéciale.

Le brevet européen 0 059 272 déposé par la demanderesse décrit un refroidisseur cryogénique dans lequel il est prévu une pièce de liaison thermique qui a une forme générale de révolution autour de l'axe longitudinal de la sonde et qui présente une pluralité de fentes longitudinales réparties sur son pourtour en vue de leur conférer une élasticité radiale. Les languettes définies par les fentes ont une surface en forme de portion de cylindre qui vient s'appuyer contre la paroi cylindrique de l'enveloppe interne du cryostat. L'inconvénient de cette réalisation est que l'effort exercé par chaque languette contre la paroi cylindrique de l'enveloppe interne du cryostat ne s'effectue par uniquement en direction radiale mais aussi en direction longitudinale. De ce fait, le contact avec la paroi cylindrique ne s'effectue pas sur toute la surface extérieure des languettes mais seulement sur une partie réduite de celle-ci.

La présente invention se propose donc de fournir une solution au problème de liaison thermique entre la sonde et l'échantillon à refroidir d'un refroidisseur cryogénique qui soit exempte des défauts des solutions décrites succintement ci-dessus.

Plus précisément, un but de la présente invention est de réaliser un refroidisseur cryogénique présentant une liaison thermique de bonne qualité entre l'extrémité refroidie de la sonde et l'enveloppe du cryostat sur laquelle est fixé l'échantillon à refroidir.

La présente invention se rapport donc à un refroidisseur cryogénique du type comprenant une sonde pourvue d'une extrémité refroidie par détente de gaz et fermé par un fond, un cryostat à double enveloppe sous vide dont l'enveloppe intérieure, formée par une paroi cylindrique fermée par un fond, est adaptée pour contenir l'extrémité refroidie de la sonde, un échantillon à refroidir, notamment un ou des détecteurs infra-rouges, fixé dans la double enveloppe du cryostat sur le fond de l'enveloppe intérieure et une pièce de liaison thermique de révolution, d'un seul tenant et bonne conductrice de la chaleur, positionnée dans l'espace libre compris entre ledit fond de la sonde et le fond de l'enveloppe intérieure du cryostat, ledit refroidisseur cryogénique étant caractérisé en ce que la pièce de liaison thermique présente sur sa paroi latérale cylindrique une gorge dans laquelle vient se loger un anneau qui est en contact avec la paroi cylindrique de l'enveloppe intérieure du cryostat, cet anneau présentant une fente qui lui confère de l'élasticité en direction radiale et permet son montage.

Pour diminuer la résistance thermique de la pièce de liasion thermique, une cavité est creusée dans la face avant de ladite pièce et le fond de cette cavité peut présenter une rainure circulaire. En outre, la pièce de liaison thermique présente une ouverture axiale qui coopère avec une partie centrale en forme de tige du fond de la sonde, cette coopération s'effectuant par l'intermédiaire de filetages portés par les deux éléments à fixer l'un sur l'autre.

D'autres caractéristiques et avantages du refroidisseur cryogénique réalisé selon l'invention apparaîtront avec la description qui suit d'un exemple de réalisation donné ci-après, en référence au dessin annexé dans lequel :

- la figure 1 est une vue d'ensemble d'un refroidisseur cryogénique selon la présente invention ;
- la figure 2 est une vue en coupe d'un mode de réalisation préféré de l'extrémité de la sonde et de la pièce de liaison thermique ;
- la figure 3 est une vue en coupe détaillée de la pièce de liaison thermique selon la présente invention, et
- la figure 4 est une vue de côté et en coupe partielle de l'anneau de la figure 3.

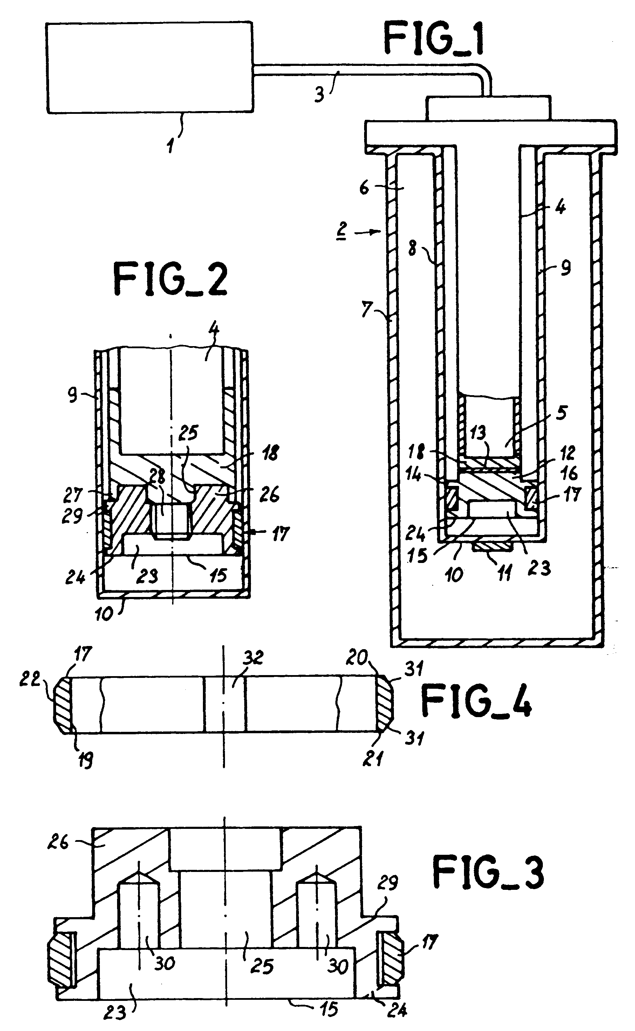

Le refroidisseur cryogénique représenté schématiquement à titre d'exemple à la figure 1 comprend deux ensembles séparés 1 et 2 reliés par un tube de liaison 3. L'ensemble 1 peut être un groupe moto-compresseur ou un groupe moto-oscillateur, adapté pour générer un débit de gaz sous pression ou une oscillation de pression dans le tube 3.

L'ensemble 2 comprend une sonde schématisée en 4 (en soi bien connue) comportant une extrémité refroidie 5 dans laquelle s'effectue une détente de gaz productrice de froid. Cette sonde est fixée par des moyens de fixation classiques (non représentés) sur un cryostat 6 formé par une enveloppe externe 7 et une enveloppe interne 8 entre lesquelles est réalisé un vide poussé.

L'enveloppe interne 8 est constituée par une paroi cylindrique 9 et par un fond circulaire 10, l'extrémité refroidie 5 de la sonde est logée dans l'enveloppe 8 au voisinage du fond 10. Un échantillon à refroidir par exemple un ou plusieurs détecteurs infra-rouges 11, est fixé sous le fond 10 entre les deux enveloppes du cryostat.

Les divers organes décrits jusqu'à présent sont classiques et ne seront pas davantage détaillés.

Selon la présente invention, la liaison thermique entre l'extrémité refroidie 5 de la sonde 4 et l'enveloppe interne 8 du cryostat 6 de manière à refroidir l'échantillon 11 fixé sur le fond 10 est réalisée par une pièce 12 dit de liaison thermique. Cette pièce 12 est en contact, d'une part, avec l'extrémité refroidie 5 et, d'autre part, avec la paroi cylindrique 9 de l'enveloppe interne 8 au voisinage du fond 10. La pièce de liaison thermique 12 a une forme générale de révolution et comprend une base ou talon 13, une paroi latérale cylindrique 14 et une face avant 15. La paroi latérale 14 présente une gorge 16 dans laquelle vient se loger un anneau 17. La base 13 est en contact avec l'extrémité refroidie 5 par l'intermédiaire d'un fond plat circulaire 18 qui ferme la sonde à son extrémité. Le fond plat 18 est habituellement soudé à l'extrémité du tube cylindrique de la sonde 4 tandis que la base 13 est collée ou vissée sur le fond plat 18 ou par tous moyens connus.

La gorge circulaire 16 s'étend sur une partie substantielle de la paroi 14 et reçoit l'anneau 17 qui présente une face interne 19 et des bords 20 et 21 en contact aussi étroit que possible avec la gorge 16 (figure 4). L'anneau 17 a une face externe 22 et son épaisseur est supérieure à la profondeur de la gorge 16 de manière que seule cette face externe 22 soit en contact aussi étroit que possible avec la paroi 9 de l'enveloppe interne 8. Pour améliorer ce contact avec la paroi 9, l'anneau 17 est prévu avec une certaine élasticité qui est obtenue par une fente 32 réalisée sur l'anneau lui-même. Cette fente permet également le montage de l'anneau dans la gorge 16. On remarquera que pour obtenir un contact aussi étroit que possible entre la gorge 16 et l'anneau 17 et entre ce dernier et la paroi 9, la gorge 16 et l'anneau 17 doivent être réalisés avec une très grande précision, le jeu entre l'anneau et la gorge étant négligeable.

La pièce de liaison thermique 12 qui vient d'être décrite en relation avec la figure 1 a des performances satisfaisantes pour de nombreuses applications. Ses performances peuvent être améliorées si elle prend la forme qui sera décrite en relation avec les figures 2 et 3.

Les modifications apportées à la forme de la pièce 12 ont pour principal objectif de diminuer le volume de ladite pièce de manière que sa résistance thermique soit aussi faible que possible et que le transfert thermique s'effectue le plus efficacement possible entre le fond 18 de la sonde 4 et l'anneau 17.

A cet effet, la face avant 15 présente une cavité 23 ayant un bord circulaire 24 suffisamment épais pour accommoder la gorge 16 et une profondeur qui n'altère pas la tenue mécanique de la pièce 12 aux températures cryogéniques. En outre, la pièce 12 est percée d'une ouverture axiale 25 qui définit une base ou talon annulaire 26. Ce talon 26 et cette ouverture 25 sont en contact étroit avec le fond 18 de la sonde 4 qui présente alors une forme appropriée. Enfin, on peut encore diminuer le volume de la pièce 12 par une rainure circulaire pratiquée sur le fond de la cavité 23 autour de l'ouverture 25. Ici aussi, on doit tenir compte de l'effet d'une telle rainure sur la tenue mécanique de la pièce 12.

Pour accommoder le talon annulaire 26, le fond 18 présente une cavité annulaire avec un bord externe 27 qui est en contact avec la partie périphérique du talon annulaire 26, cette partie périphérique ayant un épaulement 29. La partie centrale du fond 18 a la forme d'une tige 28 qui vient s'emboîter dans l'ouverture axiale 25. De préférence, cette tige 28 est filetée à son extrémité et coopère avec un filetage porté par l'ouverture axiale 25 de manière à fixer la pièce 12 sur le fond 18. Pour permettre le vissage et le dévissage de la pièce de liaison thermique 12 sur la tige 28, différents moyens peuvent être prévus. Ainsi, dans le cas où une rainure circulaire serait pratiquée dans le fond de la cavité 23, le bord interne de cette rainure aurait une forme d'écrou pour accommoder une clé appropriée. Dans l'exemple de réalisation des figures 2 et 3, qui ne comporte pas une telle rainure, il est prévu deux trous 30 diamétralement opposés qui sont percés dans le fond de la cavité 23 et qui coopèrent avec une clé comportant deux ergots.

La vue partielle en coupe de l'anneau 17 sur la figure 4 montre que les bords externes 31 de l'anneau sont chanfreinés pour permettre un meilleur glissement sur la paroi 9 de l'enveloppe 8. La partie centrale de la figure 4, qui est une vue de côté, montre la fente 32 donnant de l'élasticité à l'anneau 17.

Les matériaux qui peuvent être utilisés pour réaliser les différents éléments décrits ci-dessus, à savoir la paroi de la sonde, le fond 18, la pièce de liaison thermique 12 et l'anneau 17 sont ceux qui sont bons conducteurs thermiques aux températures cryogéniques et qui ont une bonne tenue mécanique à ces températures. Il en est ainsi du cuivre, du laiton, de l'aluminium, de l'acier inoxydable, etc...

Des essais d'un tel refroidisseur cryogénique ont montré que la pièce de liaison thermique 12 associé à l'anneau 17 permet un très bon transfert thermique entre l'extrémité refroidie 5 de la sonde 4 et l'enveloppe 9. On a constaté que le transfert thermique entre la pièce 12 et l'anneau 17 s'effectue principalement au niveau du bord 20 de l'anneau 17, ce qui montre l'importance d'un usinage de haute précision de la gorge 16 et de l'anneau 17.

**Revendications**

1. Refroidisseur cryogénique, du type comprenant une sonde (4) pourvue d'une extrémité (5) refroidie par détente de gaz et fermé par un fond (18), un cryostat (6) à double enveloppe sous vide dont l'enveloppe intérieure (8), formée par une paroi cylindrique (9) fermée par un fond (10), est adaptée pour contenir l'extrémité refroidie (5) de la sonde, un échantillon à refroidir (11), notamment un ou des détecteurs infra-rouges, fixé dans la double enveloppe du cryostat sur le fond (10) de l'enveloppe intérieure et une pièce de liaison thermique (12) de révolution, d'un seul tenant et bonne conductrice de chaleur, positionnée dans l'espace libre compris entre ledit fond (18) de la sonde et le fond (10) de l'enveloppe intérieure (8) du cryostat, ledit refroidisseur cryogénique étant caractérisé en ce que la pièce de liaison thermique (12) présente sur sa paroi latérale cylindrique une gorge (16) dans laquelle vient se loger un anneau (17) qui est en contact avec la paroi cylindrique (9) de l'enveloppe intérieure (8) du cryostat (6), cet anneau présentant une fente (32) qui lui confère de l'élasticité en direction radiale et permet son montage.

2. Refroidisseur cryogénique selon la revendication 1, caractérisé en ce que la face avant (15) de la pièce de liaison thermique (12) présente une cavité (23) qui découpe un bord (24) dans l'épaisseur duquel est disposée la gorge (16).

3. Refroidisseur cryogénique selon la revendication 2, caractérisé en ce que le fond de la cavité (23) présente une rainure circulaire.

4. Refroidisseur cryogénique selon l'une quelconque des revendications précédentes, caractérisé en ce que la pièce de liaison thermique (12) présente une ouverture axiale (25) délimitant un talon annulaire (26) qui vient se loger dans une cavité annulaire du fond (18) de la sonde (4) et coopérant avec une partie centrale (28) dudit fond (18) de manière à fixer la pièce de liaison thermique (12) sur le fond (18), le bord (24) de la cavité annulaire du fond (18) étant en contact avec la paroi latérale du talon (26).

5. Refroidisseur cryogénique selon la revendication 4, caractérisé en ce que la partie centrale (28) du fond (18) est filetée et coopère avec un filetage porté par l'ouverture axiale (25) de la pièce de liaison thermique (12).

6. Refroidisseur cryogénique selon l'une quelconque des revendications précédentes, caractérisé en ce que la face avant (15) de la pièce de liaison thermique (12) présente des moyens de préhension, tels que des trous (30), prévus pour coopérer avec une clé.

## Claims

1. A cryogenic cooler, of the type comprising a probe (4) provided with an end (5) which is cooled by the expansion of gas and closed by a base (18), a cryostat (6) having a double casing under vacuum, the inner casing (8) of which, formed by a cylindrical wall (9) closed by a base (10), is adapted to contain the cooled end (5) of the probe, a sample to be cooled (11), in particular one or more infra-red detectors, fixed in the double casing of the cryostat on the base (10) of the inner casing and a revolving thermal connection piece (12), all in one block and being a good conductor of heat, positioned in the free space comprised between said base (18) of the probe and the base (10) of the inner casing (8) of the cryostat, said cryogenic cooler being characterised in that the thermal connection piece (12) has on its lateral cylindrical wall a channel (16) in which a ring (17) comes to be housed, which is in contact with the cylindrical wall (9) of the inner casing (8) of the cryostat (6), this ring presenting a slot (32) which gives it elasticity in radial direction and allows it to be mounted.

2. A cryogenic cooler according to Claim 1, characterised in that the front face (15) of the thermal connection piece (12) presents a cavity (23) which cuts an edge (24) in the thickness of which the channel (16) is arranged.

3. A cryogenic cooler according to Claim 2, characterised in that the base of the cavity (23) presents a circular groove.

4. A cryogenic cooler according to any one of the preceding claims, characterised in that the thermal connection piece (12) presents an axial opening (25) delimiting an annular heel (26) which comes to be housed in an annular cavity of the base (18) of the probe (4) and cooperating with a central part (28) of said base (18) so as to fix the thermal connection piece (12) on the base (18), the edge (24) of the annular cavity of the base (18) being in contact with the lateral wall of the heel (26).

5. A cryogenic cooler according to Claim 4, characterised in that the central part (28) of the base (18) is threaded and cooperates with a threading carried by the axial opening (25) of the thermal connection piece (12).

6. A cryogenic cooler according to any one of the preceding claims, characterised in that the front face (15) of the thermal connection piece (12) presents gripping means, such as holes (30), provided to cooperate with a key.

## Patentansprüche

1. Tieftemperatur-Kühleinrichtung vom Typ mit einer Sonde (4) in einem durch Entspannung von Gas gekühltem, durch einen Boden (18) verschlossenen Ende (5), einem Kryostaten (6) mit evakuiertem Doppelmantel, dessen Innenmantel (8), der eine durch einen Boden (10) verschlossene zylindrische Wand (9) aufweist, so ausgebildet ist, daß er das gekühlte Sondenende (5) aufnehmen kann, einer zu kühlenden Probe (11), insbesondere einem oder mehreren Infrarotdetektoren, die in dem Doppelmantel des Kryostaten am Boden (10) des Innenmantels befestigt sind, und einem rotationssymmetrischen einstückigen Verbindungsstück (12) guter Wärmeleitfähigkeit, das im freien Raum zwischen dem Boden (18) der Sonde und dem Boden (10) des Innenmantels (8) des Kryostaten angeordnet ist, dadurch gekennzeichnet, daß das thermische Verbindungsstück (12) an seiner seitlichen zylindrischen Wand eine Nut (16) aufweist, in der ein Ring (18) untergebracht ist, der in Berührung mit der zylindrischen Wand (9) des Innenmantels (8) des Kryostaten (6) steht, wobei dieser Ring einen Schlitz (32) aufweist, der ihm Elastizität in radialer Richtung verleiht und seine Montage ermöglicht.

2. Tieftemperatur-Kühleinrichtung nach Anspruch 1, dadurch gekennzeichnet, daß die Vorderseite (15) des thermischen Verbindungsstücks (12) eine Aussparung (23) aufweist, die einen Rand (24) freischneidet, in dessen Dicke die Nut (16) angeordnet ist.

3. Tieftemperatur-Kühleinrichtung nach Anspruch 2, dadurch gekennzeichnet, daß der Boden der Aussparung (23) eine kreisförmige Rille aufweist.

4. Tieftemperatur-Kühleinrichtung gemäß einem der vorstehenden Ansprüche, dadurch gekennzeichnet, daß das thermische Verbindungsstück (12) eine axiale Öffnung (25) aufweist, die einen ringförmigen Absatz (26) begrenzt, der von einem ringförmigen Hohlraum im Boden (18) der Sonde (4) aufzunehmen ist und mit einem Mittelteil (28) des Bodens (18) zusammenwirkt, um das thermische Verbindungsstück (12) am Boden (18) zu befestigen, wobei der Rand (24) des ringförmigen Hohlraums im Boden (18) in Kontakt mit der Seitenwand des Absatzes (26) steht.

5. Tieftemperatur-Kühleinrichtung nach Anspruch 4, dadurch gekennzeichnet, daß der Mittelteil (28) des Bodens (18) mit einem Gewinde versehen ist und mit einem Gewinde zusammenwirkt, das von der axialen Öffnung (25) des thermischen Verbindungsstücks (12) getragen wird.

6. Tieftemperatur-Kühleinrichtung nach einem der vorstehenden Ansprüche, dadurch gekennzeichnet, daß die Vorderseite (15) des thermischen Verbindungsstücks (12) Angriffsmittel, wie Löcher (30), aufweist, die zum Zusammenwirken mit einem Schlüssel dienen.

FIG_1

FIG_2

FIG_4

FIG_3